# EUROPEAN PATENT SPECIFICATION

(11) **EP 2 604 108 B1**
(45) Date of publication and mention of the grant of the patent: **29.03.2017**
(21) Application number: 12196600.6
(22) Date of filing: 11.12.2012
(51) Int. Cl.: A01K 13/00

(54) **Equipment for brushing cattle**
Vorrichtung zum Bürsten von Rindern
Équipement pour le brossage de bétail

(30) Priority: 12.12.2011 IT CR20110018
(43) Date of publication of application: 19.06.2013
(73) Proprietor: L.C. SNC Di Trombini Luca & C., 25010 Isorella (BS) (IT); Salvetti & Gervasi di Bologni Fabio & C. SNC, 46043 Castiglione Delle Stiviere (MN) (IT); Bahtyyar, Alev, Corlu - Tekirdag (TR)
(72) Inventor: Bahtyyar, Alev, Corlu - Tekirdag (TR)
(74) Representative: Marcio', Paola

(56) References cited:
- WO-A1-2010/040631
- DE-U1- 29 609 477
- US-A- 4 872 422

## Description

The present invention relates to the livestock equipment sector.

More specifically, the invention refers to equipment for brushing cattle.

This type of equipment is generally designed to clean the cattle and give them relief from itching caused by parasites that hide under their coat.

Traditional cleaning equipment substantially comprise a brush, provided with an axial-symmetrical shape and arranged for rotating on its own axis by means of a specific motor apparatus.

Generally, these cleaning brushes are arranged vertically and are held up by a support arm.

The means of connection between the brushes and the respective support arms allow the oscillation of the brush when pushed by the animal.

Patent No EP 1665927 B1 discloses equipment for brushing cattle in which the means of connection between the brush and the support arm allow the oscillation of the brush only in two planes orthogonal to each other.

These means of connection comprise first and second hinge means created using pins orthogonal to each other, so as to allow the oscillations of the brush only in said two planes orthogonal to each other.

In particular, these kinematic means allow the oscillation of said brush in a vertical plane, and then allow the rotation of said vertical plane on a horizontal axis, substantially defined as the axis of the support arm.

Disadvantageously, the combination of these two oscillations orthogonal to each other makes movement of the brush extremely free and its position considerably unstable.

As it pushes against the brush, the animal can never find a fixed point at which, by voluntarily exerting a certain pressure, it can remain for longer under the effect of the cleaning action.

The brush tends to slip away from the animal and consequently its cleaning action is approximate and difficult.

WO 2010/040631 A1 discloses an equipment for brushing cattle wherein the kinematic means of connection between the brush and the support arm allow oscillation of the brush in a vertical plane, and the rotation of said vertical plane on a horizontal axis. Disadvantageously, the rotation on said horizontal axis has no limitations and has no end position where the animal can stand to be massaged: therefore, the risk for the animal to lose the brush remains, always making the cleaning force approximate and difficult.

DE 296 09 477 U1 discloses an equipment for brushing cattle wherein the kinematic means of connection between the brush and the support arm allow, besides oscillation of the brush in a vertical plane, rotation of said vertical plane on a horizontal axis. Said vertical rotation axis is arranged at the opposite end of the support arm with respect to the brush, in proximity of the load-bearing wall, so that it is the whole support arm to rotate, and not only the brush. Disadvantageously, the space where the animal can move is reduced and limited by the space occupied by the wall, and again the cleaning risks to be approximate and difficult due to the fact that it is difficult for the animal to move.

The present invention proposes to overcome these limitations, by providing equipment for brushing cattle that is comfortable and practical for the animals, and efficient as regards the actual cleaning operation.

A further object of the invention is to allow the animal to interact with the brush so as to control its movement and get the greatest possible benefit therefrom.

These objects are achieved with equipment for brushing cattle, comprising:
- a brush provided with an axial-symmetrical shape and arranged for rotating on its own axis;
- a motor apparatus, provided with a circuit board for controlling the rotation of said brush on its own axis;
- a support arm for said brush, provided with a first end associated with a fixed load-bearing element and with a second overhanging end adapted to support said brush;
- kinematic means of connection between said brush and said arm, arranged for allowing the oscillation of said brush in a vertical plane, wherein said kinematic means of connection also allow the rotation of said vertical plane on an axis, characterized in that:
- said first end is stably associated with said fixed load-bearing element;
- said kinematic means are provided at the second end of said support arm;
- said axis is vertical.

According to a first embodiment of the invention, the rotation of said vertical plane is within a predefined angle, between two end positions.

Advantageously, the amplitude of said angle is less than 360°.

In possible embodiment of the invention, the amplitude of said angle is around 180°.

According to particular embodiments of the invention, said kinematic means of connection comprise a connecting rod with a first end connected to said brush and a second end connected to said axis.

According to a preferred embodiment of the invention, the first end of said connecting rod comprises hinge means arranged for supporting said brush allowing the oscillation thereof in a vertical plane.

Further, said second end of said connecting rod comprises sleeve means, arranged for engaging with said axis and to rotate on it.

Advantageously, said sleeve means comprise an electric connector with sliding contacts for the connection of a mains power cable to a secondary power cable for said motor apparatus.

In particular, said electric connector comprises a plurality of brushes fixed and connected to said power cable, on which corresponding rings provided on said sleeve slide, wherein said rings are electrically insulated and connected to said secondary power cable.

Alternatively, said support arm comprises a slot acting as a guide element for said connecting rod, arranged for defining said two rotation end positions of said vertical plane.

According to an advantageous embodiment of the invention, said connecting rod comprises a bearing arranged for rotating on a suitable support surface associated with said support arm.

In a preferred embodiment of the invention, said motor apparatus is interposed between said brush and said hinge means.

The main advantage of the equipment according to the invention is that the kinematic means of connection between said brush and its support arm allow the movement of the brush in space, thereby assuring the maximum cleaning action and the maximum comfort for the animal.

Advantageously, said hinge means allow the oscillation of the brush in a vertical plane, while the sleeve means allow the rotation of said vertical plane on an always vertical axis, thereby adapting to every possible position of the animal.

In a particular embodiment of the invention, the predefined angle through which the vertical plane of oscillation of the brush can rotate is 360°: the chosen sleeve means and the electric convector with sliding contacts allow the connecting rod supporting the brush to rotate fully on its axis without any interference between the mechanical components and the electrical components.

Advantageously, the electric connector allows the electrical connection between the motor apparatus, which causes the rotation of the brush on its axis and is positioned near the brush, and the power cable connected to the mains which runs along the fixed support arm, without the risk of twisting cables and damage to the electrical components.

In a further embodiment of the invention, the predefined angle within which the vertical plane of oscillation of the brush can rotate is between two end positions pressing against the animal.

These end positions are advantageously defined by the slot provided on the support arm.

In this way, said brush provides a counter force against the pressure exerted by the animal and thereby guarantees greater stability, which results in the possibility of better cleaning.

Once the animal, while pushing against the brush, pushes it to one of the end positions, it can remain there for an unlimited period of time and be massaged by the rotation of the brush on its axis, because the brush cannot move and slip away from the body of the animal.

In this particular embodiment, said sleeve means cooperate with said bearing, to ensure a more stable movement of the connecting rod to which the brush is applied: the rotation of the sleeve means is therefore in perfect equilibrium, with no risk of loss of balance.

The position of the motor apparatus to the outside of said kinematic means of connection means that the rotation of the brush on its axis is completely independent from its movement in space.

The advantages of the present invention will become more apparent from the following descriptions of preferred embodiments thereof, which are illustrated by no way of limitation in the accompanying drawings, in which:
Figures 1 and 2 show an axonometric view and a partially sectioned side view of equipment for brushing cattle according to a first embodiment of the invention;
Figures 3 and 4 show two transversal cross-sections along two planes orthogonal to each other of a detail of the equipment for brushing cattle illustrated in Figure 1;
Figure 5 shows a partially transparent side view of equipment for brushing cattle according to a second embodiment of the invention;
Figure 6 shows a transversal cross-section of a detail of the equipment for brushing cattle illustrated in Figure 5.

With reference to the Figures, equipment 1 for brushing cattle according to two embodiments of the invention is shown.

Said equipment 1 essentially comprises a brush 2 arranged for rubbing the coat of the cattle, fixed by means of appropriate means of connection to a support arm 4, arranged substantially on a horizontal plane and fixed overhanging a wall or appropriate load-bearing structure.

Said brush 2 is made with plastic bristles with a diameter of between 1.6 mm and 2.5 mm to offer the animal a soft massaging action.

Said brush 2 is provided with an axial-symmetrical shape, in particular with a circular cross-section, and is arranged for rotating on its own axis x driven by an appropriate motor apparatus 3.

Said motor apparatus 3 is placed between said brush 2 and said means of connection and is protected by a metallic case 11.

The circuit board controlling said motor apparatus 3 is fitted directly thereto, thus minimizing the dimensions of the equipment.

Said circuit board also has a safety function: it detects any overloads in the motor apparatus, for example due to anomalies or to the animal's tail getting caught up in the brush, and it interrupts or inverts the brush's rotation movement.

Said means of connection, interposed between said brush 2 and said arm 4, comprise a connecting rod 6, with a first end 6' and a second end 6", comprising hinge means 5 and sleeve means 7 respectively.

Said hinge means 5 are arranged for allowing the oscillation of said brush 2 in a vertical plane π.

In particular, said hinge means 5 are associated with one end of the brush 2 and comprise a rotation pin 12 carried by the end 6', in the shape of an upturned U, of the connecting rod 6.

Said sleeve means 7, on the other hand, allow the rotation of said vertical plane π on a vertical axis y, orthogonal to the plane in which said support arm 4 lies.

Said axis y therefore always belongs to, or is parallel with, the plane π in which said brush 2 oscillates.

In particular, said vertical plane π rotates according to a predefined angle α, between two end positions A and B.

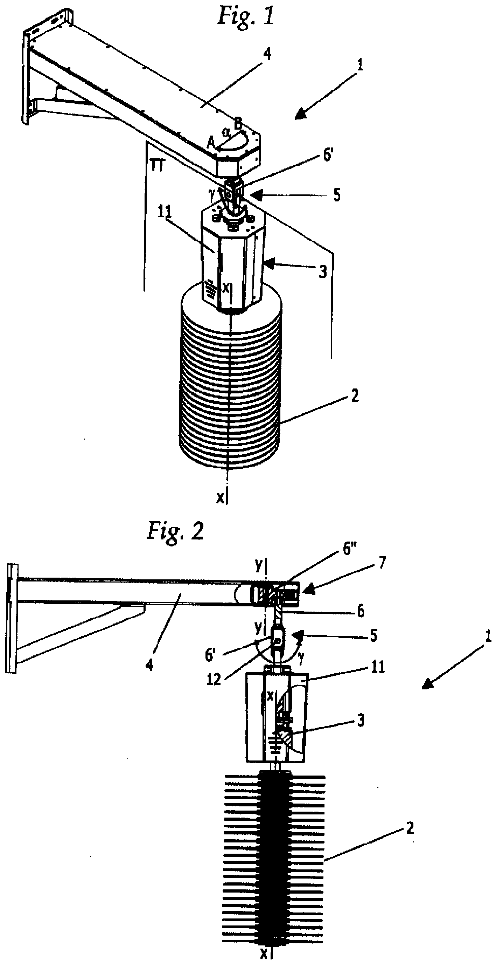

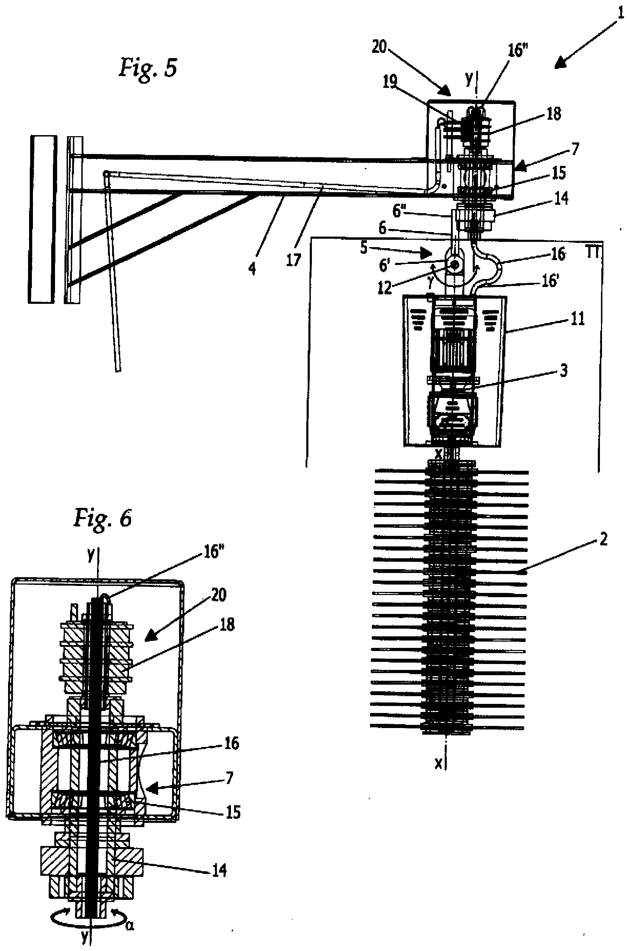

In the more general embodiment illustrated in Figures 1-4, said angle α has an amplitude of around 180°, but in alternative solutions, such as in the embodiment illustrated in Figures 6 and 7, the angle of rotation α could advantageously be greater than 180°, up to an ampltude of 360°, thereby allowing the complete rotation in the plane π.

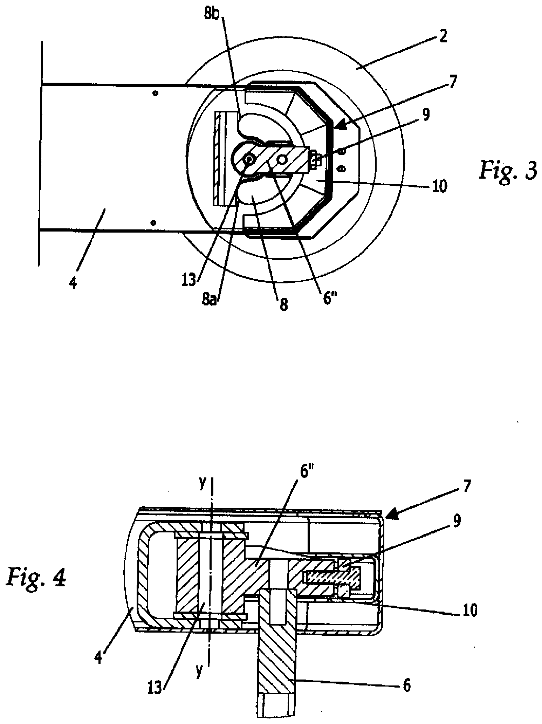

With reference to the details shown in Figures 3 and 4, said angle α defines the two end positions A, B that can be reached by said brush 2 when pushed by the cattle.

Said sleeve means 7, associated with the second end 6" of said connecting rod 6, are arranged for engaging with a pin 13 defining the axis of rotation y.

The rotation movement of the sleeve means 7 on said axis y is limited between said two predefined end positions A and B.

Said two end positions are defined by a slot 8 acting as a guide element for said connecting rod 6.

With particular reference to the cross-section shown in Figure 3, the ends 8a and 8b of said slot 8 constitute two striking elements against which said connecting rod 6 strikes during its angular rotation on axis y.

Said two ends 8a and 8b acting as striking elements are substantially positioned at the end of a semicircular slot, so as to limit the amplitude of the angle α to around 180°, and they define said end positionsA and B.

Said second end 6" of said connecting rod 6 also comprises a bearing 9 arranged for rotating on a suitable support surface 10 belonging to said support arm 4, in order to prevent the weight of the brush from bending the pin 13 (Fig. 4).

With reference to the details shown in Figures 5 and 6, said angle α is equivalent to 360° and the vertical plane π of oscillation of the brush 2 can rotate freely in space on said axis y.

Said sleeve means 7, associated with the second end 6" of said connecting rod 6, consist of a shaft 14, free to rotate axially on itself inside a bearing 15 provided at the end of said support arm 4.

Said shaft 14 is hollow and contains therein it a secondary electric power cable 16 for said motor apparatus 3.

Said electric cable 16 is connected at one end 16' to said motor apparatus 3 and is electrically connected to the mains power cable 17 that runs along the support arm 4, by means of an electric connector 20 with sliding contacts provided on said sleeve means 7.

Said electric connector 20 comprises a plurality of brushes 19 stably associated with said support arm 4 and electrically connected to the mains power cable 17.

Sliding on said brushes 19 are corresponding electrically insulated rings 18, provided on said sleeve means 7, in particular along the side surface of said shaft 14.

Said rings 18 allow the flow of electrical current from said brushes 19 to the secondary power cable 16 provided inside the shaft 14 and integral thereto, so as to guarantee the operation of the motor apparatus 3 without any risk of twisting of the mains power cable 17.

Operation of the equipment 1 for brushing cattle according to the invention is described below.

The animals, moving freely, approach the brush 2 and move it with their body.

Initially, the brush 2 does not put up any resistance to the force of the animal and moves in space: it oscillates in a vertical plane π due to the hinge means 5 and rotates on an axis y due to the presence of the sleeve means 7.

Upon contact between the brush 2 and the animal, once a 10° angle of inclination γ is reached, the circuit board starts the motor apparatus 3 that drives the brush 2, which begins to turn on its own axis x resulting in rubbing, and hence cleaning, of the animal's coat.

The animal guides the brush, which, in the embodiment in which the angle α can advantageously be 360°, is therefore free to take an infinite number of positions, thereby adapting to any size and shape of the animal.

On the other hand, once one of the two end positions A or B is reached, in the embodiment in which the angle α is limited, the brush cannot continue rotating on said axis y because it reaches one of the stopping and striking elements 8a or 8b of the slot 8, and the force that the animal continues to exert on the brush 2 results in greater pressure and optimizes the cleaning action of the brush 2.

The animal can then decide to move away from the brush 2 and thereby interrupt the cleaning operation, or it can change its position with respect to the brush 2, freeing the end position just used and engaging the opposing end position.

When the inclination of the brush 2 reaches an angle γ less than 10°, the circuit board sends a new signal to the motor apparatus, which interrupts the axial rotary movement of said brush, with the maximum safety for the animal.

The invention has been described with reference to a brush for cattle, but naturally the average technician could choose brushes and dimensions for the equipment that would enable its use also for other livestock or household pets.

## Claims

1. Equipment (1) for brushing cattle, comprising:
- a brush (2) provided with an axial-symmetrical shape and arranged for rotating on its own axis (x);
- a motor apparatus (3), provided with a circuit board for controlling the rotation of said brush (2) on its own axis (x);
- a support arm (4) for said brush (2), provided with a first end associated with a fixed load-bearing element and with a second overhanging end adapted to support said brush (2);
- kinematic means of connection between said brush (2) and said arm (4), arranged for allowing the oscillation of said brush (2) in a vertical plane (π),
wherein said kinematic means of connection also allow the rotation of said vertical plane (π) on an axis (y),
**characterized in that**:
- said first end is stably associated with said fixed load-bearing element;
- said kinematic means are provided at the second end of said support arm (4);
- said axis (y) is vertical.

2. Equipment (1) for brushing cattle according to claim 1, **characterized in that** the rotation of said vertical plane (π) is within a predefined angle (α), between two end positions (A, B).

3. Equipment (1) for brushing cattle according to claim 2, **characterized in that** the amplitude of said angle (α) is less than 360°.

4. Equipment (1) for brushing cattle according to claim 3, **characterized in that** the amplitude of said angle (α) is around 180°.

5. Equipment (1) for brushing cattle according to claim 1, **characterized in that** said kinematic means of connection comprise a connecting rod (6) with a first end (6') connected to said brush (2) and a second end (6") connected to said axis (y).

6. Equipment (1) for brushing cattle according to claim 5, **characterized in that** said first end (6') of said connecting rod (6) comprises hinge means (5), arranged for supporting said brush (2) allowing the oscillation thereof in said vertical plane (π).

7. Equipment (1) for brushing cattle according to claim 5, **characterized in that** said second end (6") of said connecting rod (6) comprises sleeve means (7), arranged for engaging with said axis (y) and to rotate on it.

8. Equipment (1) for brushing cattle according to claim 7, **characterized in that** said sleeve means (7) comprise an electric connector (20) with sliding contacts for the connection of a mains power cable (17) to a secondary power cable (16) for said motor apparatus (3).

9. Equipment (1) for brushing cattle according to claim 8, **characterized in that** said electric connector (20) comprises a plurality of brushes (19) fixed and connected to said mains power cable (17), on which corresponding rings (18) provided on said sleeve (7) slide, wherein said rings (18) are electrically insulated and connected to said secondary power cable (16).

10. Equipment (1) for brushing cattle according to claims 2 and 7, **characterized in that** said support arm (4) comprises a slot (8) acting as a guide element for said connecting rod (6), arranged for defining said two end positions (A, B).

11. Equipment (1) for brushing cattle according to claim 7, **characterized in that** said connecting rod (6) comprises a bearing (9) arranged for rotating on a suitable support surface (10) associated with said support arm (4).

12. Equipment (1) for brushing cattle according to claim 6, **characterized in that** said motor apparatus (3) is interposed between said brush (2) and said hinge means (5).

## Patentansprüche

1. Vorrichtung (1) zum Bürsten von Vieh, umfassend:
- eine Bürste (2), ausgestattet mit einer axial-symmetrischen Form und so eingerichtet, dass sie um ihre eigene Achse (x) rotiert;
- einen Bewegungsapparat (3), ausgestattet mit einer Platine zur Kontrolle der Rotation der besagten Bürste (2) um ihre eigene Achse (x);
- einen Stützarm (4) für besagte Bürste (2), ausgestattet mit einem ersten Ende, verbunden mit einem tragfähigen Element und mit einem zweiten überhängenden Ende, das angepasst ist, um besagte Bürste (2) zu tragen:
- kinematische Verbindungsmittel zwischen besagter Bürste (2) und besagtem Arm (4), eingerichtet, um die Schwingung der besagten Bürste (2) in einer vertikalen Ebene (π) zu erlauben,
wobei besagte kinematische Verbindungsmittel auch die Rotation der besagten vertikalen Ebene (π) auf einer Achse (y) erlauben,
**gekennzeichnet dadurch, dass**:
- besagtes erstes Ende fest mit dem besagten tragfähigen Element verbunden ist;
- besagte kinematische Mittel am zweiten Ende des besagten Stützarms (4) bereitgestellt sind:
- besagte Achse (y) vertikal verläuft.

2. Vorrichtung (1) zum Bürsten von Vieh gemäß Anspruch 1, **gekennzeichnet dadurch, dass** die Rotation der besagten vertikalen Ebene (π) innerhalb eines vordefinierten Winkels (α), zwischen zwei Endpositionen (A, B), erfolgt.

3. Vorrichtung (1) zum Bürsten von Vieh gemäß Anspruch 2, **gekennzeichnet dadurch, dass** die Weite des besagten Winkels (α) kleiner als 360° ist.

4. Vorrichtung (1) zum Bürsten von Vieh gemäß Anspruch 3, **gekennzeichnet dadurch, dass** die Weite des besagten Winkels (α) etwa 180° beträgt.

5. Vorrichtung (1) zum Bürsten von Vieh gemäß Anspruch 1, **gekennzeichnet dadurch, dass** besagte kinematische Verbindungsmittel eine Verbindungsstange (6) mit einem ersten Ende (6') umfassen, das mit der besagten Bürste (2) verbunden ist, und ein zweites Ende (6"), das mit der besagten Achse (y) verbunden ist.

6. Vorrichtung (1) zum Bürsten von Vieh gemäß Anspruch 5, **gekennzeichnet dadurch, dass** besagtes erstes Ende (6') der besagten Verbindungsstange (6) Scharniervorrichtungen (5) umfasst, eingerichtet, um die besagte Bürste (2) zu stützen, so dass deren Schwingung in der besagten vertikalen Ebene (π) erlaubt wird.

7. Vorrichtung (1) zum Bürsten von Vieh gemäß Anspruch 5, **gekennzeichnet dadurch, dass** besagtes zweites Ende (6") der besagten Verbindungsstange (6) Hülsenvorrichtungen (7) umfasst, eingerichtet, um besagte Achse (y) in Anspruch zu nehmen und auf ihr zu rotieren.

8. Vorrichtung (1) zum Bürsten von Vieh gemäß Anspruch 7, **gekennzeichnet dadurch, dass** besagte Hülsenvorrichtungen (7) eine elektrische Steckverbindung (20) mit Gleitkontakten zur Verbindung eines Netzanschlusskabels (17) mit einem sekundären Netzkabel (16) für den besagten Bewegungsapparat (3) umfassen.

9. Vorrichtung (1) zum Bürsten von Vieh gemäß Anspruch 8, **gekennzeichnet dadurch, dass** besagte elektrische Steckverbindung (20) eine Vielzahl von Bürsten (19) umfasst, fest und mit dem besagten Netzanschlusskabel (17) verbunden, auf der entsprechende Ringe (18), die auf den besagten Hülsenvorrichtungen (7) bereitgestellt sind, gleiten, wobei besagte Ringe (18) elektrisch isoliert sind und mit dem besagten sekundären Netzkabel (16) verbunden sind.

10. Vorrichtung (1) zum Bürsten von Vieh gemäß den Ansprüchen 2 und 7, **gekennzeichnet dadurch, dass** besagter Stützarm (4) einen Schlitz (8) umfasst, der als Führungselement für die besagte Verbindungsstange (6) dient, eingerichtet, um zwei Endpositionen (A, B) zu definieren.

11. Vorrichtung (1) zum Bürsten von Vieh gemäß Anspruch 7, **gekennzeichnet dadurch, dass** besagte Verbindungsstange (6) ein Lager (9) umfasst, eingerichtet, auf einer geeigneten Auflagefläche (10) zu rotieren, die mit dem besagten Stützarm (4) verbunden ist.

12. Vorrichtung (1) zum Bürsten von Vieh gemäß Anspruch 6, **gekennzeichnet dadurch, dass** besagter Bewegungsapparat (3) zwischen der besagten Bürste (2) und den besagten Scharniervorrichtungen (5) eingefügt ist.

## Revendications

1. Équipement (1) pour le brossage du bétail, comprenant :
- une brosse (2) dotée d'une forme axiale symétrique et disposée pour pivoter sur son propre axe (x) ;
- un dispositif moteur (3), équipé d'un circuit imprimé pour le contrôle de la rotation de ladite brosse (2) sur son propre axe (x) ;
- un bras de support (4) pour ladite brosse (2), équipé d'une première extrémité associée à un élément portant fixe et d'une deuxième extrémité suspendue prévue pour soutenir ladite brosse (2) ;
- des moyens cinématiques de connexion entre ladite brosse (2) et ledit bras (4), disposés pour permettre l'oscillation de ladite brosse (2) sur un plan vertical (π),
où lesdits moyens cinématiques de connexion permettent également la rotation dudit plan vertical (π) sur un axe (y),
**caractérisé par le fait que** :
- ladite première extrémité est associée de manière stable audit élément portant fixe ;
- lesdits moyens cinématiques sont prévus sur la deuxième extrémité dudit bras de support (4) ;
- ledit axe (y) est vertical.

2. Équipement (1) pour le brossage du bétail selon la revendication 1, **caractérisé par le fait que** la rotation dudit plan vertical (π) s'effectue selon un angle prédéfini (α), entre deux positions finales (A, B).

3. Équipement (1) pour le brossage du bétail selon la revendication 2, **caractérisé par le fait que** l'amplitude dudit angle (α) est inférieure à 360°.

4. Équipement (1) pour le brossage du bétail selon la revendication 3, **caractérisé par le fait que** l'amplitude dudit angle (α) est autour de 180°.

5. Équipement (1) pour le brossage du bétail selon la revendication 1, **caractérisé par le fait que** les moyens cinématiques de connexion comprennent une bielle (6) avec une première extrémité (6') connectée à ladite brosse (2) et une deuxième extrémité (6") connectée audit axe (y).

6. Équipement (1) pour le brossage du bétail selon la revendication 5, **caractérisé par le fait que** ladite première extrémité (6') de ladite bielle (6) comprend des moyens d'articulation (5), disposés pour soutenir ladite brosse (2) permettant son oscillation dans ledit plan vertical (πr).

7. Équipement (1) pour le brossage du bétail selon la revendication 5, **caractérisé par le fait que** ladite deuxième extrémité (6") de ladite bielle (6) comprend des moyens à manchon (7), disposés pour s'engager avec ledit axe (y) et pour pivoter sur celui-ci.

8. Équipement (1) pour le brossage du bétail selon la revendication 7, **caractérisé par le fait que** lesdits moyens à manchon (7) comprennent un connecteur électrique (20) avec des contacts coulissants pour la connexion d'un câble d'alimentation secteur (17) à un câble d'alimentation secondaire (16) pour ledit dispositif moteur (3).

9. Équipement (1) pour le brossage du bétail selon la revendication 8, **caractérisé par le fait que** ledit connecteur électrique (20) comprend une multitude de balais (19) fixes et connectés audit câble d'alimentation secteur (17), sur lequel des anneaux correspondants (18) prévus sur ledit manchon (7) coulissent, où lesdits anneaux (18) sont isolés électriquement et raccordé audit câble d'alimentation secondaire (16).

10. Équipement (1) pour le brossage du bétail selon les revendications 2 et 7, **caractérisé par le fait que** ledit bras de support (4) comprend une fente (8) qui sert d'élément de guidage pour ladite bielle (6), disposée de manière à définir lesdites deux positions finales (A, B).

11. Équipement (1) pour le brossage du bétail selon la revendication 7, **caractérisé par le fait que** ladite bielle (6) comprend un palier (9) disposé de manière à pivoter sur une surface de support adaptée (10) associée audit bras de support (4).

12. Équipement (1) pour le brossage du bétail selon la revendication 6, **caractérisé par le fait que** ledit dispositif moteur (3) est intercalé entre ladite brosse (2) et lesdits moyens d'articulation (5).
